# EUROPEAN PATENT SPECIFICATION

(11) **EP 3 666 489 B1**
(45) Date of publication and mention of the grant of the patent: **20.04.2022**
(21) Application number: 19152445.3
(22) Date of filing: 18.01.2019
(51) Int. Cl.: B29C 43/02, D06N 7/00, B29K 21/00, B29K 105/26, B29L 31/00

(54) **FLOOR MATS AND METHODS OF PRODUCING THE SAME**
FUSSMATTEN UND VERFAHREN ZUR HERSTELLUNG DERSELBEN
TAPIS DE SOL ET LEURS PROCÉDÉS DE FABRICATION

(30) Priority: 14.12.2018 US 201862779939 P
(43) Date of publication of application: 17.06.2020
(73) Proprietor: Aladdin Manufacturing Corporation, Calhoun, GA 30701 (US)
(72) Inventor: TRIMBLE, Craig, Calhoun, GA Georgia 30701 (US); JENKINS, Joey, Calhoun, GA Georgia 30701 (US); EDWARDS, Shawn, Calhoun, GA Georgia 30701 (US); LAWSON, Anthony, Calhoun, GA Georgia 30701 (US); SANCHEZ-CAMARILLO, Franco, Calhoun, GA Georgia 30701 (US); BROWN, Andrew, Calhoun, GA Georgia 30701 (US)
(74) Representative: Vande Ginste, Kristof Omer

(56) References cited:
- EP-A2- 2 674 027
- US-A- 1 948 327
- US-A- 2 349 236
- US-B1- 6 221 298

## Description

### BACKGROUND

Floor mats typically have a flat lower surface that contacts a floor or the ground. Water and debris get stuck between the lower surface and the surface contacted by the mat, which can damage the surface and/or the mat over time.

Thus, there is a need in the art for a mat that allows water and debris to shed from below the mat.

EP2674027 A2 discloses a method for manufacturing a mat and the resulting product. The mat comprising: a lower surface and first and second edge portions, the first and second edge portions define at least a portion of a perimeter of the mat; and a plurality of ribs for contacting a floor, the ribs extending away from the lower surface in a direction that is transverse to a plane that includes the lower surface, each rib having a longitudinal axis that extends between ends of the rib, and at least a portion of the plurality of ribs comprising one or more branches that extend transversely to the longitudinal axis and are axially spaced apart from each other, wherein: the ribs are spaced apart from each other over the lower surface such that adjacent ribs define a valley therebetween so that humidity can be evacuated from beneath the lower surface of the mat, and the longitudinal axis of each rib intersects the first and second edges of the mat at angles that are greater than 0° and less than 90°.

### BRIEF SUMMARY

According to a first aspect, a mat is provided that comprises a lower surface, first and second edge portions, and a plurality of ribs for contacting the floor. The first and second edge portions define at least a portion of a perimeter of the mat. The ribs extend away from the lower surface in a direction that is transverse to a plane that includes the lower surface. Each rib has a longitudinal axis that extends between ends of the rib. And, at least a portion of the plurality of ribs comprises one or more branches that extend transversely to the longitudinal axis and are axially spaced apart from each other. The ribs are spaced apart from each other over the lower surface such that adjacent ribs define a valley therebetween so that humidity can be evacuated from beneath the lower surface of the mat, and the longitudinal axis of each rib intersects the first and second edges of the mat at angles that are greater than 0° and less than 90°, and wherein the branches on adjacent ribs are spaced apart axially and laterally relative to each other such that the distal ends of each branch do not contact or align with the distal ends of branches on immediately adjacent ribs.

According to some embodiments, the adjacent ribs may not intersect each other on the lower surface.

According to some embodiments, the longitudinal axes of the ribs may be parallel to each other.

According to some embodiments, the branches may be perpendicular to the longitudinal axis of the rib from which the branches extend.

According to some embodiments, the ribs include first, second, and third ribs, the second rib is laterally between the first and third ribs, and longitudinal axes extending through the branches of the first and third ribs may align with each other and/or may be offset from longitudinal axes extending through branches of the second rib.

According to some embodiments, the longitudinal axes extending through branches of the second rib may bisect a distance between longitudinal axes extending through adjacent branches on the first rib and between longitudinal axes extending through adjacent branches on the third rib.

According to some embodiments, a width of each rib as measured perpendicular to the longitudinal axis of the rib and within plane that is parallel to the plane of the lower surface may be at least 0.0625 inches (1.5875 mm), preferably at least 0.1 inches (2.54 mm), and more preferably at least 0.26 inches (6.6 mm). In the following, all dimensions provided in inches can be converted to the SI-unit millimetres by multiplying the amount in inches by 25.4. Therefore 1 Inch equals 25.4 Millimetres .

According to some embodiments, a depth of each rib as measured from the lower surface to distal surface of the rib and within a plane that is perpendicular to the lower surface may be at least 0.05 inches, preferably at least 0.075 inches, and more preferably at least 0.1 inches.

According to some embodiments, facing surfaces of adjacent ribs may be spaced apart at least 0.125 inches, preferably at least 0.2 inches, and more preferably at least 0.6 inches.

According to some embodiments, a ratio of a surface area of the ribs and a surface area of the lower surface may be between 0.1 and 0.75, preferably between 0.25 and 0.6, and more preferably 0.5.

According to a second aspect, a method of forming a mat is provided, the method comprising:
- providing a mold cavity having a floor surface and one or more edge surfaces, the one or more edge surfaces extending upwardly from the floor surfaces and defining a perimeter of the mold cavity,
- providing a mold press plate for engaging the mold cavity, the mold press plate defining a plurality of channels that extend into an engagement surface the press plate, each channel comprising a main portion having a longitudinal axis that extends between ends of the main portion of the respective channel, and at least a portion of the channels further comprise one or more branch portions that extend transversely to the longitudinal axis of the main portion and are axially spaced apart from each other;
- pouring a backing material into the mold cavity and pressing the plate into the mold cavity and against a surface of the backing material, the surface of the backing material forming a lower surface of the mat;
- removing the backing from the mold cavity, the backing having an upper surface and the lower surface, the lower surface defining a plurality of ribs and branches formed by the channels in the mold press plate so that humidity can be evacuated from beneath the lower surface of the mat, and wherein the branches on adjacent ribs are spaced apart axially and laterally relative to each other such that the distal ends of each branch do not contact or align with the distal ends of branches on immediately adjacent ribs.

According to some embodiments the method further may comprise:
- applying a layer of glue to the upper surface of the backing; and
- flocking short fibers ahead of one end of each fiber falling into the layer of glue.

According to some embodiments, the method according to the second aspect may be used to provide mats according to the first aspect.

The mats have the characteristic that humidity can be evacuated from beneath the lower surface of the mat. In addition, the mats may further have the characteristic that debris can easily be removed from beneath the lower surface of the mat. The mats may also have the characteristic that during production, the backing and hence the mat are stiffer than conventional mats having flat bottom surfaces. This increased stiffness may also be beneficial during the production of the mat itself, e.g., during application of glue and/or flocking.

### BRIEF DESCRIPTION OF THE DRAWINGS

Example features and implementations are disclosed in the accompanying drawings. However, the present disclosure is not limited to the precise arrangements shown.
FIG. 1 illustrates a plan view of a lower surface of a mat according to a preferred embodiment.
FIG. 2 illustrates a side view of the mat shown in FIG. 1.
FIG. 3 illustrates a perspective view of the mat shown in FIG. 1.
FIG. 4A illustrates a schematic view of a mold cavity, and FIG. 4B illustrates a perspective bottom view of mold press plate according to a preferred embodiment.

### DETAILED DESCRIPTION

Various implementations include a mat having a lower surface and first and second edge portions that define at least a portion of a perimeter of the mat. The mat also includes a plurality of ribs that extend away from the lower surface of the mat for contacting the floor. Each rib has a longitudinal axis that extends between ends of the rib, and at least a portion of the plurality of ribs includes one or more branches that extend transversely to the longitudinal axis and are axially spaced apart from each other. The ribs are spaced apart from each other over the lower surface such that adjacent ribs define a valley therebetween. Water and/or debris can flow through the valleys. In addition, the longitudinal axis of each rib intersects the first and second edges of the mat at angles that are greater than 0° and less than 90°. Thus, the ribs are disposed diagonally relative to the edges of the mat that they intersect.

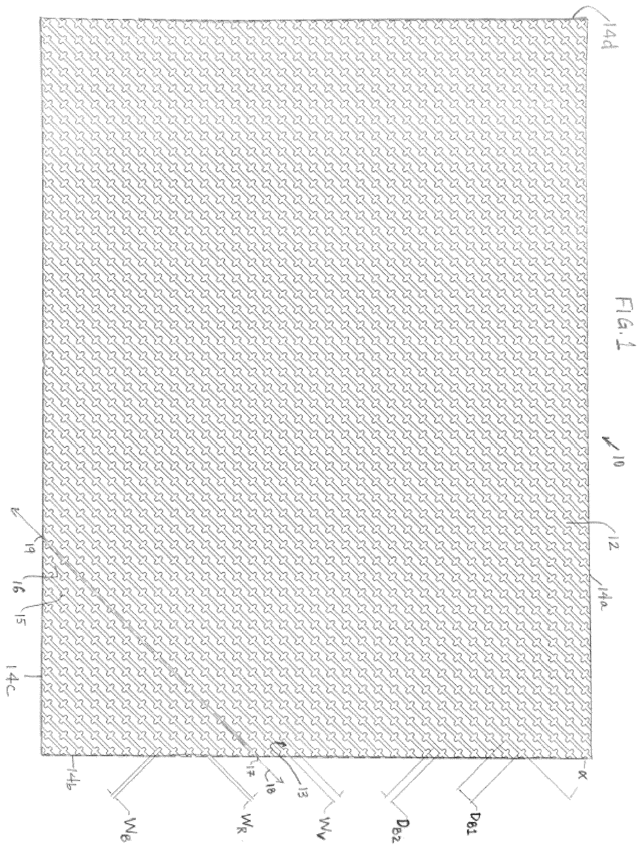

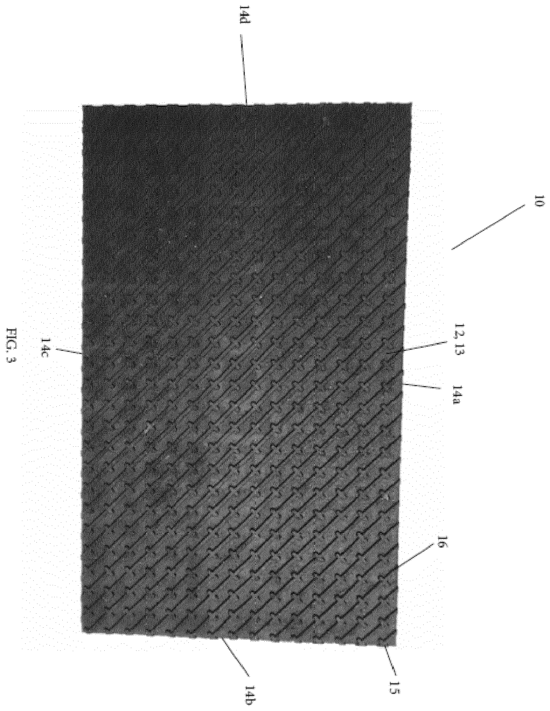

For example, in the implementation shown in FIGS. 1-3, the mat 10 includes a lower surface 12, and first, second, third, and fourth side edges 14a-14d, respectively, define a perimeter of the mat 10. The side edges 14a-14d define a rectangular perimeter. Thus, first side edge 14a and third side edge 14c are opposite and spaced apart from each other, and second side edge 14b and fourth side edge 14d are opposite and spaced apart from each other. However, in other implementations, the mat has a perimeter having arcuate shaped side edges and/or three or more intersecting side edges (e.g., a circular shaped perimeter, an oval shaped perimeter, a football shaped perimeter, a triangular shaped perimeter, a hexagonal shaped perimeter, etc.).

The mat also includes a plurality of ribs 16 that extend away from the lower surface 12 in a direction that is transverse to a plane that includes the lower surface 12. Each rib 16 has a longitudinal axis 18 that extends between ends 17, 19 of the rib 16. The ends 17, 19 of each rib 16 intersect two of the side edges 14a-d (e.g., side edges 14a and 14b, side edges 14a and 14c, or side edges 14a and 14d) at an angle α of 45°. A main portion of each rib 16 is straight, and each rib 16 further includes one or more branches 15 that extend from the main portion perpendicularly to the longitudinal axis 18 and are axially spaced apart from each other. The ribs 16 are also spaced apart from each other over the lower surface 12 such that adjacent ribs 16 define a valley 13 therebetween. And, the branches 15 on adjacent ribs are spaced apart axially and laterally relative to each other such that the distal ends of each branch 15 do not contact or align with the distal ends of branches 15 on immediately adjacent ribs 16. Thus, water and/or debris flowing through the valleys 13 flows around the distal ends of the branches 15 in an undulating pattern. The branches 15 provide structural integrity to the mat 10 by preventing the mat 10 from shifting relative to the longitudinal axes of the ribs 15 when pressure is applied to the upper surface of the mat 10.

In the implementation shown, the longitudinal axes 18 of the ribs 16 are parallel to each other, and the branches 15 are perpendicular to the respective longitudinal axes 18. In addition, the branches 15 on every other rib 16 are aligned with each other along axes that are perpendicular to the axes 18, and the axes on which the branches 15 on every other rib 16 are aligned bisect the distance between axially adjacent branches 15 on the immediately adjacent ribs 16.

Furthermore, in the implementation shown, the longitudinal axes of the ribs intersect the side edges 14a-14d at an angle α of 45°, but in other implementations, the angle at which the ribs intersect the side edges is greater than 0° and less than 90°.

However, in other implementations, at least a portion of the longitudinal axes of the ribs are not parallel to each other but do not intersect on the lower surface of the mat, at least a portion of the branches are transverse to the respective longitudinal axis, and/or the axes extending through distal ends of the branches 15 that extend from every other rib 16 are not aligned and/or are offset from the midpoint between the axes extending through axially adjacent branches 15 on ribs 16 that are immediately laterally adjacent.

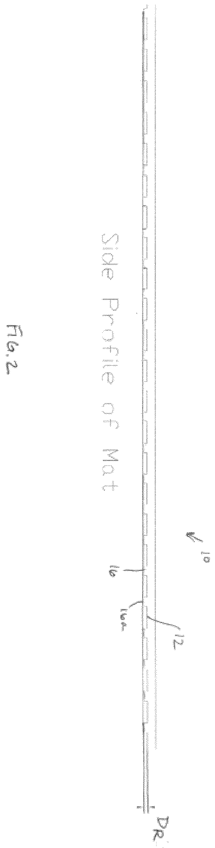

According to various implementations, a width W_{R} of each rib as measured perpendicular to the longitudinal axis 18 of the rib 16 and within a plane that is parallel to the plane of the lower surface 12 is at least 0.0625 inches. For example, the width W_{R} may be between 0.1 to 0.5 inches, such as 0.2669 inches as shown in FIG. 1. A width W_{B} of each branch as measured within a plane that is parallel to the plane of the lower surface 12 and perpendicular to a longitudinal axis extending between the ends of the branch is at least 0.0625 inches. For example, the width W_{B} may be between 0.1 to 0.5 inches, such as 0.2807 inches as shown in FIG. 1. A depth D_{R} of each rib 16 as measured from the lower surface 12 to distal surface 16a of the rib 16 and within a plane that is perpendicular to the lower surface 12 is at least 0.05 inches. For example, the depth D_{R} may be between 0.05 and 0.2 inches, such as 0.125 inches as shown in FIG. 2. At least one branch 15 extends from at least one side of each rib 16, and axially adjacent surfaces of branches extending from the same rib are axially spaced apart by a distance D_{B1} of at least 0.0625 inches. For example, the distance D_{B1} may be between 0.5 and 3 inches, such as 1.4971 inches as shown in FIG. 1. Facing surfaces of adjacent ribs define a width of the valley 13 defined between the adjacent ribs, and the width Wv of the valley is at least 0.125 inches. For example, the width W_{V} is between 0.2 and 1.0 inches, such as 0.6170 inches as shown in FIG. 1. A distance D_{B2} defined by facing surfaces of axially adjacent branches extending toward each other from laterally adjacent ribs is at least 0.125 inches. For example, the distance D_{B2} is between 0.2 and 1.0 inches, such as 0.6032 inches as shown in FIG. 1. The angle α between the longitudinal axes 18 of the ribs 16 and the edges 14a-14d is between 0° and 90° (e.g., 45° as shown in FIG. 1). A ratio of the width W_{V} of the valley to a length of each branch 15 as measured from the distal end of the branch 15 to the surface of the rib 16 from which the branch 15 extends is greater than 1, such that the distal end of the branch remains spaced apart from the rib adjacent to the branch. For example, the ratio is at least 2.

Furthermore, a ratio of the width W_{R} of each rib and the width W_{B} of each branch is between 0.25 and 4.5. For example, the ratio of the width W_{R} and the width W_{B} is between 0.5 and 1.5, such as 0.95 as shown in FIG. 1. A ratio of the width W_{R} of each rib and the width Wv of each valley is between 1.2 and 0.1. For example, the ratio of the width W_{R} and the width Wv is between 0.8 and 0.3, such as 0.4326 as shown in FIG. 1. A ratio of a surface area of the ribs 16 (including the branches 15) and a total surface area of the lower surface 12 is between 0.1 and 0.75. For example, the ratio of the surface area of the ribs and the total surface area is between 0.25 and 0.6, such as 0.5.

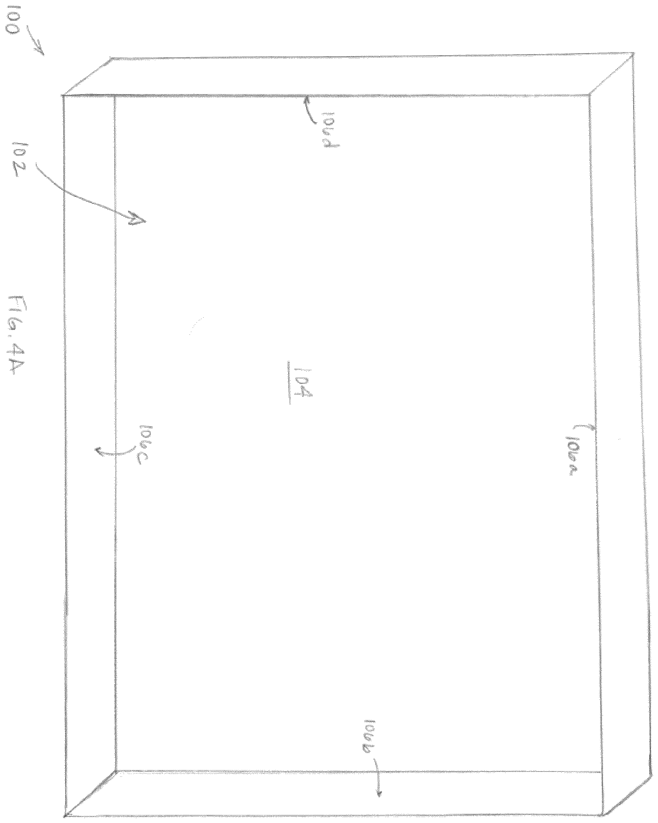

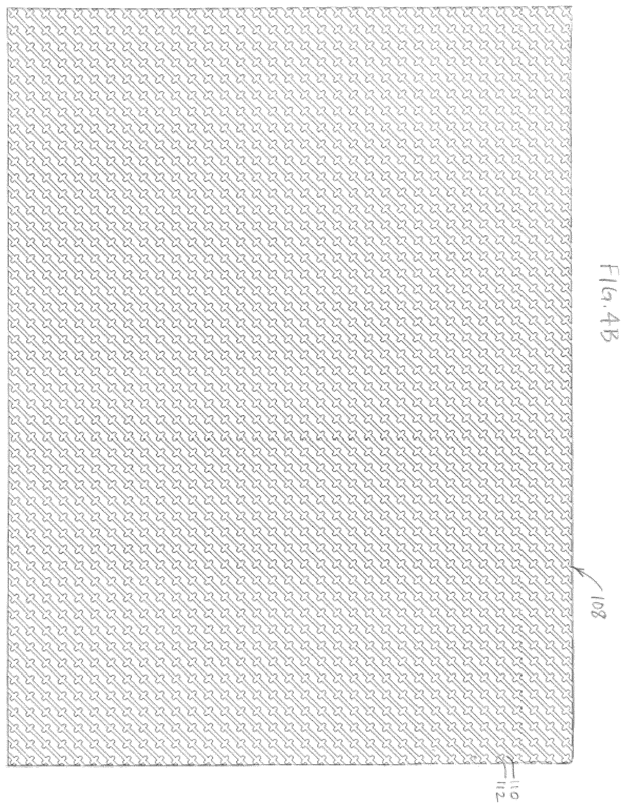

FIGS. 4A and 4B illustrate a mold apparatus in which the mat 10 is formed. According to this implementation, the mold apparatus 100 includes a mold base 102 that defines a mold cavity, shown in FIG. 4A, and includes a mold press plate 108, shown in FIG. 4B, that is pressed onto a material disposed in the cavity. The mold base 102 includes a floor surface 104 and edge surfaces 106a-106d that extend upwardly from the floor surface 104 and define a perimeter of the mold cavity. The number of edge surfaces corresponds with the outer perimeter of the mat to be formed, and the contour of the floor surface 104 corresponds to a contour of an upper surface of a backing for the mat to be formed.

The mold press plate 108 defines a plurality of channels 112 that extend inwardly from an engagement surface 110 of the press plate 108. A perimeter of each channel 112 corresponds to the perimeter of the shape of the ribs to be formed, and a depth of each channel 112 corresponds to a depth of the ribs to be formed. The mold press plate 108 is formed of a rigid material, such as stainless steel.

A backing material is poured into the mold cavity, and the press plate 108 is pressed against the backing material in the mold cavity to form the ribs and valleys. The press plate 108 is removed when the backing material is sufficiently cured as to hold its shape from the application of the press plate 108. The cured (or nearly cured) material forms a backing of the mat 10. In some implementations, the backing material comprises a natural or synthetic rubber material. For example, in one implementation, the backing material is recycled rubber (e.g., from tires) and a urethane binder.

The backing is then removed from the mold cavity 102. The backing has an upper (or first) surface that has the shape of the floor 104 of the mold base 102 (e.g., flat) and a lower (or second) surface that was molded by the press plate 108 and corresponds to the lower surface 12 of the mat 10 described above. The lower surface defines the ribs 16 described above, which are formed by the channels 112 in the mold press plate 108.

To apply glue to the first surface, the mat is fed through at least one pair of pinch rollers, and a layer of glue is deposited on the first surface of the backing. The branches, such as branches 15, formed on the second surface of the backing material, distribute the pressure from the pinch rollers across the first and second surfaces more evenly, which allows the glue to be applied at a more consistent thickness over the first surface of the backing material.

Then, the mat is urged through a flocking mechanism, and short fibers are flocked such that one end of each fiber falls into the layer of glue and the other end of the fiber is spaced apart from the glue layer. The flocking mechanism creates an electrical field that orients the fibers vertically relative to the first surface of the backing (e.g., the longitudinal axes of the fibers are perpendicular relative to the first surface of the backing).

Disclosed are materials, systems, devices, methods, compositions, and components that can be used for, can be used in conjunction with, can be used in preparation for, or are products of the disclosed methods, systems, and devices. These and other components are disclosed herein, and it is understood that when combinations, subsets, interactions, groups, etc. of these components are disclosed that while specific reference of each various individual and collective combinations and permutations of these components may not be explicitly disclosed, each is specifically contemplated and described herein. For example, if a device is disclosed and discussed every combination and permutation of the device, and the modifications that are possible are specifically contemplated unless specifically indicated to the contrary. Likewise, any subset or combination of these is also specifically contemplated and disclosed. This concept applies to all aspects of this disclosure including, but not limited to, steps in methods using the disclosed systems or devices. Thus, if there are a variety of additional steps that can be performed, it is understood that each of these additional steps can be performed with any specific method steps or combination of method steps of the disclosed methods, and that each such combination or subset of combinations is specifically contemplated and should be considered disclosed.

## Claims

1. A mat comprising:
a lower surface (12) and first and second edge portions, the first and second edge portions define at least a portion of a perimeter of the mat (10); and
a plurality of ribs (16) for contacting a floor, the ribs (16) extending away from the lower surface (12) in a direction that is transverse to a plane that includes the lower surface (12), each rib (16) having a longitudinal axis (18) that extends between ends (17, 19) of the rib (16), and at least a portion of the plurality of ribs (16) comprising one or more branches (15) that extend transversely to the longitudinal axis (18) and are axially spaced apart from each other,
wherein:
the ribs (16) are spaced apart from each other over the lower surface (12) such that adjacent ribs (16) define a valley (13) therebetween so that humidity can be evacuated from beneath the lower surface (12) of the mat (10), and the longitudinal axis (18) of each rib (16) intersects the first and second edges of the mat (10) at angles that are greater than 0° and less than 90°, and wherein the branches (15) on adjacent ribs are spaced apart axially and laterally relative to each other such that the distal ends of each branch (15) do not contact or align with the distal ends of branches (15) on immediately adjacent ribs (16).

2. The mat of claim 1, wherein adjacent ribs (16) do not intersect each other on the lower surface (12).

3. The mat of claim 2, wherein the longitudinal axes (18) of the ribs (16) are parallel to each other.

4. The mat of any one of claims 1-3, wherein the branches (15) are perpendicular to the longitudinal axis (18) of the rib (16) from which the branches (15) extend.

5. The mat of claim 4, wherein the ribs (16) include first, second, and third ribs, the second rib is laterally between the first and third ribs, and longitudinal axes extending through the branches (15) of the first and third ribs align with each other and are offset from longitudinal axes extending through branches of the second rib.

6. The mat of claim 5, wherein the longitudinal axes extending through branches (15) of the second rib bisect a distance between longitudinal axes extending through adjacent branches on the first rib and between longitudinal axes extending through adjacent branches (15) on the third rib.

7. The mat of any one of claims 1-6, wherein a width of each rib (16) as measured perpendicular to the longitudinal axis (18) of the rib (16) and within plane that is parallel to the plane of the lower surface (12) is at least 1.5875 mm, preferably at least 2.54 mm more preferably at least 6.6 mm

8. The mat of any one of claims 1-7, wherein a depth of each rib (16) as measured from the lower surface (12) to distal surface (16a) of the rib (16) and within a plane that is perpendicular to the lower surface (12) is at least 1.27 mm, preferably at least 1.905 mm, more preferably at least 2,54 mm.

9. The mat of any one of claims 1-8, wherein facing surfaces of adjacent ribs (16) are spaced apart at least 3.175 mm, preferably at least 5.08 mm, more preferably at least 15.24 mm.

10. The mat of any one of claims 1-9, wherein a ratio of a surface area of the ribs (16) and a surface area of the lower surface (12) is between 0.1 and 0.75, preferably between 0.25 and 0.6, more preferably as 0.5.

11. A method of forming a mat according to any of claim 1 to 10, the method comprising:
providing a mold cavity (102) having a floor surface (104) and one or more edge surfaces (106), the one or more edge surfaces (106) extending upwardly from the floor surfaces (104) and defining a perimeter of the mold cavity (102),
providing a mold press plate (108) for engaging the mold cavity (102), the mold press plate (108) defining a plurality of channels (112) that extend into an engagement surface (110) of the press plate (108), each channel (112) comprising a main portion having a longitudinal axis that extends between ends of the main portion of the respective channel (112), and at least a portion of the channels (112) further comprise one or more branch portions that extend transversely to the longitudinal axis of the main portion and are axially spaced apart from each other;
pouring a backing material into the mold cavity (102) and pressing the plate (108) into the mold cavity (102) and against a surface of the backing material, the surface of the backing material forming a lower surface (12) of the mat (10); and
removing the backing from the mold cavity (102), the backing having an upper surface and the lower surface, the lower surface defining a plurality of ribs (16) and branches (15) formed by the channels (112) in the mold press plate (108) so that humidity can be evacuated from beneath the lower surface (12) of the mat (10), and wherein the branches (15) on adjacent ribs are spaced apart axially and laterally relative to each other such that the distal ends of each branch (15) do not contact or align with the distal ends of branches (15) on immediately adjacent ribs (16).

12. The method of forming a mat according to claim 11, further comprising:
applying a layer of glue to the upper surface of the backing; and
flocking short fibers ahead of one end of each fiber falling into the layer of glue.

## Patentansprüche

1. Matte, umfassend:
eine Unterseite (12) und einen ersten und zweiten Randabschnitt, wobei der erste und zweite Randabschnitt mindestens einen Abschnitt eines Umfangs der Matte (10) definieren; und
eine Vielzahl von Rippen (16) zum Berühren eines Fußbodens, wobei sich die Rippen (16) von der Unterseite (12) in einer Richtung weg erstrecken, die quer zu einer Ebene verläuft, die die Unterseite (12) einschließt, wobei jede Rippe (16) eine Längsachse (18) aufweist, die sich zwischen den Enden (17, 19) der Rippe (16) erstreckt, und wobei mindestens ein Teil der Vielzahl von Rippen (16) einen oder mehrere Zweige (15) umfasst, die sich quer zur Längsachse (18) erstrecken und axial voneinander beabstandet sind,
wobei:
die Rippen (16) über der Unterseite (12) so voneinander beabstandet sind, dass benachbarte Rippen (16) ein Tal (13) dazwischen definieren, sodass Feuchtigkeit von unterhalb der Unterseite (12) der Matte (10) abgeleitet werden kann, und die Längsachse (18) jeder Rippe (16) den ersten und zweiten Rand der Matte (10) unter Winkeln schneidet, die größer als 0° und kleiner als 90° sind, und wobei die Zweige (15) auf benachbarten Rippen axial und seitlich relativ zueinander so beabstandet sind, dass die fern gelegenen Enden jedes Zweigs (15) die fern gelegenen Enden von Zweigen (15) auf unmittelbar benachbarten Rippen (16) nicht berühren oder mit ihnen fluchten.

2. Matte gemäß Anspruch 1, wobei sich benachbarte Rippen (16) auf der Unterseite (12) nicht überschneiden.

3. Matte gemäß Anspruch 2, wobei die Längsachsen (18) der Rippen (16) parallel zueinander verlaufen.

4. Matte gemäß einem der Ansprüche 1-3, wobei die Zweige (15) rechtwinklig zur Längsachse (18) der Rippe (16) verlaufen, von der sich die Zweige (15) erstrecken.

5. Matte gemäß Anspruch 4, wobei die Rippen (16) eine erste, eine zweite und eine dritte Rippe umfassen, die zweite Rippe sich seitlich zwischen der ersten und dritten Rippe befindet und die Längsachsen, die sich durch die Zweige (15) der ersten und der dritten Rippe erstrecken, miteinander fluchten und gegenüber den Längsachsen, die sich durch die Zweige der zweiten Rippe erstrecken, versetzt sind.

6. Matte gemäß Anspruch 5, wobei die Längsachsen, die sich durch Zweige (15) der zweiten Rippe erstrecken, einen Abstand zwischen Längsachsen, die sich durch benachbarte Zweige der ersten Rippe erstrecken, und zwischen Längsachsen, die sich durch benachbarte Zweige (15) der dritten Rippe erstrecken, halbieren.

7. Matte gemäß einem der Ansprüche 1-6, wobei die Breite jeder Rippe (16), rechtwinklig zur Längsachse (18) der Rippe (16) und in einer Ebene gemessen, die parallel zur Ebene der Unterseite (12) verläuft, mindestens 1,5875 mm, vorzugsweise mindestens 2,54 mm und noch bevorzugter mindestens 6,6 mm beträgt.

8. Matte gemäß einem der Ansprüche 1-7, wobei die Tiefe jeder Rippe (16), von der Unterseite (12) zur fern gelegenen Fläche (16a) der Rippe (16) und innerhalb einer Ebene gemessen, die rechtwinklig zur Unterseite (12) verläuft, mindestens 1,27 mm, vorzugsweise mindestens 1,905 mm, noch bevorzugter mindestens 2,54 mm beträgt.

9. Matte gemäß einem der Ansprüche 1-8, wobei die einander zugewandten Flächen benachbarter Rippen (16) mindestens 3,175 mm, vorzugsweise mindestens 5,08 mm, noch bevorzugter mindestens 15,24 mm voneinander beabstandet sind.

10. Matte gemäß einem der Ansprüche 1-9, wobei ein Verhältnis zwischen einer Oberfläche der Rippen (16) und einer Oberfläche der Unterseite (12) zwischen 0,1 und 0,75, vorzugsweise zwischen 0,25 und 0,6, noch bevorzugter 0,5 beträgt.

11. Verfahren zum Bilden einer Matte gemäß einem der Ansprüche 1 bis 10, wobei das Verfahren umfasst:
Bereitstellen eines Formhohlraums (102) mit einer Bodenfläche (104) und einer oder mehreren Randflächen (106), wobei sich die eine oder mehreren Randflächen (106) von den Bodenflächen (104) nach oben erstrecken und einen Umfang des Formhohlraums (102) definieren,
Bereitstellen einer Formpressplatte (108) zum Eingreifen in den Formhohlraum (102), wobei die Formpressplatte (108) eine Vielzahl von Kanälen (112) definiert, die sich in eine Eingriffsfläche (110) der Pressplatte (108) erstrecken, wobei jeder Kanal (112) einen Hauptabschnitt mit einer Längsachse umfasst, die sich zwischen den Enden des Hauptabschnitts des jeweiligen Kanals (112) erstreckt, und mindestens ein Teil der Kanäle (112) ferner einen oder mehrere Zweigabschnitte umfasst, die sich quer zur Längsachse des Hauptabschnitts erstrecken und axial voneinander beabstandet sind;
Gießen eines Trägermaterials in den Formhohlraum (102) und Pressen der Platte (108) in den Formhohlraum (102) und gegen eine Fläche des Trägermaterials, wobei die Fläche des Trägermaterials eine Unterseite (12) der Matte (10) bildet; und
Entfernen des Trägers aus dem Formhohlraum (102), wobei der Träger eine Oberseite und die Unterseite aufweist, wobei die Unterseite eine Vielzahl von Rippen (16) und Zweigen (15) definiert, die durch die Kanäle (112) in der Formpressplatte (108) gebildet werden, sodass Feuchtigkeit von unterhalb der Unterseite (12) der Matte (10) abgeleitet werden kann, und wobei die Zweige (15) auf benachbarten Rippen axial und seitlich relativ zueinander so beabstandet sind, dass die fern gelegenen Enden jedes Zweigs (15) die fern gelegenen Enden von Zweigen (15) auf unmittelbar benachbarten Rippen (16) nicht berühren oder mit ihnen fluchten.

12. Verfahren zum Bilden einer Matte gemäß Anspruch 11, ferner umfassend:
Auftragen einer Klebstoffschicht auf die Oberseite des Trägers; und
Beflocken kurzer Fasern, bevor ein Ende jeder Faser in die Klebeschicht fällt.

## Revendications

1. Un tapis qui comprend :
une surface inférieure (12) et une première et une deuxième portion marginale, la première et la deuxième portion marginale définissant au moins une portion d'un périmètre du tapis (10) ; et
une pluralité de nervures (16) pour entrer en contact avec un sol, les nervures (16) s'étendant à l'écart de la surface inférieure (12) dans une direction qui est transversale par rapport au plan qui englobe la surface inférieure (12), chaque nervure (16) possédant un axe longitudinal (18) qui s'étend entre des extrémités (17, 19) de la nervure (16), et au moins une portion desdites plusieurs nervures (16) comprenant une ou plusieurs branches (15) qui s'étendent dans la direction transversale par rapport à l'axe longitudinal (18) et qui sont espacées les unes par rapport aux autres dans la direction axiale ;
dans lequel :
les nervures (16) sont espacées les unes par rapport aux autres sur la surface inférieure (12) d'une manière telle que des nervures adjacentes (16) définissent un creux (13) entre elles de telle façon que l'humidité peut être évacuée à partir de l'endroit qui est situé en dessous de la surface inférieure (12) du tapis (10), et l'axe longitudinal (18) de chaque nervure (16) coupe le premier et le deuxième bord du tapis (10) en formant des angles qui sont supérieurs à 0° et inférieurs à 90° ; et dans lequel les branches (15) sur des nervures adjacentes sont espacées les unes par rapport aux autres dans la direction axiale et dans la direction latérale d'une manière telle que les extrémités distales de chaque branche (15) n'entrent pas en contact ou ne s'alignent pas avec les extrémités distales de branches (15) sur des nervures directement adjacentes (16).

2. Le tapis selon la revendication 1, dans lequel des nervures adjacentes (16) ne se coupent pas de manière réciproque sur la surface inférieure (12).

3. Le tapis selon la revendication 2, dans lequel les axes longitudinaux (18) des nervures (16) sont parallèles les uns par rapport aux autres.

4. Le tapis selon l'une quelconque des revendications 1 à 3, dans lequel les branches (15) sont perpendiculaires à l'axe longitudinal (18) de la nervure (16) à partir de laquelle les branches (15) s'étendent.

5. Le tapis selon la revendication 4, dans lequel les nervures (16) englobent une première, une deuxième et une troisième nervure, la deuxième nervure étant disposée en position latérale entre la première et la troisième nervure, et les axes longitudinaux qui s'étendent à travers les branches (15) de la première et de la troisième nervure viennent se disposer en alignement les uns avec les autres et sont décalés par rapport aux axes longitudinaux qui s'étendent à travers les branches de la deuxième nervure.

6. Le tapis selon la revendication 5, dans lequel les axes longitudinaux qui s'étendent à travers les branches (15) de la deuxième nervure partagent en deux une distance entre les axes longitudinaux qui s'étendent à travers des branches adjacentes sur la première nervure et entre des axes longitudinaux qui s'étendent à travers des branches adjacentes (15) sur la troisième nervure.

7. Le tapis selon l'une quelconque des revendications 1 à 6, dans lequel une largeur de chaque nervure (16), telle qu'on la mesure en direction perpendiculaire par rapport à l'axe longitudinal (18) de la nervure (16) et au sein d'un plan qui est parallèle au plan de la surface inférieure (12) s'élève à au moins 1,5875 mm, de préférence à au moins 2,54 mm, de manière plus préférée à au moins 6,6 mm.

8. Le tapis selon l'une quelconque des revendications 1 à 7, dans lequel une profondeur de chaque nervure (16), telle qu'on la mesure à partir de la surface inférieure (12) jusqu'à la surface distale (16a) de la nervure (16) et au sein d'un plan qui est perpendiculaire à la surface inférieure (12) s'élève à au moins 1,27 mm, de préférence à au moins 1,905 mm, de manière plus préférée à au moins 2,54 mm.

9. Le tapis selon l'une quelconque de revendications 1 à 8, dans lequel des surfaces réciproquement opposées de nervures adjacentes (16) sont espacées les unes par rapport aux autres à raison d'au moins 3,175 mm, de préférence à raison d'au moins 5,08 mm, de manière plus préférée à raison d'au moins 15,24 mm.

10. Le tapis selon l'une quelconque de revendications 1 à 9, dans lequel un rapport d'une aire de surface des nervures (16) et d'une aire de surface de la surface inférieure (12) se situe entre 0,1 et 0,75, de préférence entre 0,25 et 0,6, de manière plus préférée is 0,5.

11. Un procédé de confection d'un tapis conformément à l'une quelconque des revendications 1 à 10, le procédé comprenant le fait de :
procurer une cavité de moule (102) qui possède une surface de base (104) et une ou plusieurs surfaces marginales (106), lesdites une ou plusieurs surfaces marginales (106) s'étendant vers le haut à partir des surfaces de base (104) et définissant un périmètre de la cavité de moule (102) ;
procurer une plaque de presse de moulage (108) qui est destinée à entrer en contact avec la cavité de moule (102), la plaque de presse de moulage (108) définissant un certain nombre de canaux (112) qui s'étendent jusque dans une surface de mise en contact (110) de la plaque de presse (108), chaque canal (112) comprenant une portion principale qui possède un axe longitudinal qui s'étend entre des extrémités de la portion principale du canal respectif (112), et au moins une portion des canaux (112) comprennent en outre une ou plusieurs portions en forme de branches qui s'étendent dans la direction transversale par rapport à l'axe longitudinal de la portion principale et qui sont espacées les unes par rapport aux autres dans la direction axiale ;
verser une matière de support dans la cavité de moule (102) et comprimer la plaque (108) dans la cavité de moule (102) et contre une surface de la matière de support, la surface de la matière de support formant une surface inférieure (12) du tapis (10) ; et
retirer le support de la cavité de moule (102), le support possédant une surface supérieure et la surface inférieure, la surface inférieure définissant un certain nombre de nervures (16) et de branches (15) formées par les canaux (112) dans la plaque presse de moulage (108), d'une manière telle que l'humidité peut être évacuée à partir de l'endroit qui est situé en dessous de la surface inférieure (12) du tapis (10) ; et dans lequel les branches (15) sur des nervures adjacentes sont espacées les unes par rapport aux autres dans la direction axiale et dans la direction latérale d'une manière telle que les extrémités distales de chaque branche (15) n'entrent pas en contact ou ne viennent pas se disposer en alignement avec les extrémités distales de branches (15) sur des nervures directement adjacentes (16).

12. Le procédé de confection d'un tapis conformément à la revendication 11, qui comprend en outre le fait de :
appliquer une couche de colle sur la surface supérieure du support ; et
projeter par flocage des courtes fibres devant une extrémité de chaque fibre qui tombe dans la couche de colle.
